# DEMANDE DE BREVET EUROPEEN

(11) **EP 0 821 298 A1**
(43) Date de publication de la demande: **28.01.1998**
(21) Numéro de dépôt: 97420117.0
(22) Date de dépôt: 15.07.1997
(51) Int. Cl.: G05G 5/06, F16K 31/53

(54) **Train d'engrenages de réarmement autobloquant**

(30) Priorité: 22.07.1996 FR 9609481
(71) Demandeur: JEAMBRUN APPAREILLAGES S.A.R.L., F-25120 Maiche (FR)
(72) Inventeur: Jeambrun, Georges, 25120 Maiche (FR)
(74) Mandataire: Kiehl, Hubert

(57) **Abrégé**

Un train d'engrenages (10,12,14,18) transmet un mouvement rotatif de l'arbre d'une première roue (10) à l'arbre d'une dernière roue (18) auquel est rattachée une pièce (30) qui tourne contre l'effet d'un moyen élastique de rappel (32), et qui est susceptible d'être accrochée dans une première position dite armée par des moyens de retenue. Selon l'invention, au moins trois roues dentées successives (12,14,18) présentent un jeu entre les dents, et ont des axes de rotation parallèles dont les deux entraxes forment un angle (a) compris entre 10 et 180°. Plus particulièrement alors, l'axe de rotation (15) de la roue médiane (14) présente un jeu selon la bissectrice de l'angle (α) dans sa platine ou palier de support.

## Description

La présente invention est relative à un train d'engrenages de réarmement pour transmettre un mouvement rotatif de l'arbre d'une première roue à l'arbre d'une dernière roue auquel est rattachée une pièce qui tourne contre l'effet d'un moyen élastique de rappel, et qui est susceptible d'être retenue dans une première position dite "armée". L'invention concerne plus particulièrement un train d'engrenages se bloquant automatiquement lorsque cette dernière roue et la pièce retournent en une seconde position dite "détendue". Lorsque la première roue tourne à une vitesse inférieure à celle de la roue finale, on parle d'un engrenage réducteur de vitesse.

Ce type d'engrenage de réarmement peut être utilisé pour amener un levier, par exemple d'un sectionneur de courant électrique, ou un capot de machine en une première position, ouverte ou fermée, où il est accroché par un moyen de retenue mécanique ou électromagnétique sous contrainte d'un ressort le ramenant dans la seconde position inverse après libération du moyen de retenue.

Le train d'engrenages selon l'invention a plus particulièrement été conçu pour contrôler la position d'un clapet, d'une trappe ou d'une porte coupe-feu ou de désenfumage solidaire de l'arbre de la dernière roue. Par exemple, dans le cas d'un clapet coupe-feu, ce train d'engrenages permet l'ouverture puis l'accrochage du clapet au moyen d'un moteur ou d'une manivelle agissant sur l'arbre de la première roue. Suite à une alerte au feu, par exemple déclenchée automatiquement par un capteur de fumée ou de chaleur, le clapet est décroché et relâché pour venir obturer un conduit.

L'inconvénient d'un train d'engrenages est que la position détendue, en l'occurrence d'obturation du conduit de fumée par le clapet, n'est pas véritablement stable, notamment si elle n'est plus contrôlée que par un ressort lui-même détendu, et si un jeu est présent entre les roues de l'engrenage.

Le but de la présente invention est un train d'engrenages de réarmement permettant de bloquer la seconde position dite "détendue", par exemple d'obturation d'un conduit par un clapet, notamment à l'encontre d'une poussée violente telle que celle due à une explosion, à une forte pression d'air ou à une poussée manuelle. A l'inverse, le train d'engrenages doit pouvoir être débloqué très rapidement dès que l'on agit sur la première roue pour réarmer, soit par un moteur, soit par une manivelle.

Ces buts sont réalisés dans un train d'engrenages transmettant un mouvement rotatif de l'arbre d'une première roue à l'arbre d'une dernière roue auquel est rattachée une pièce qui tourne contre l'effet d'un moyen élastique de rappel, et qui est susceptible d'être accrochée dans une première position dite "armée" par des moyens de retenue, du fait qu'au moins trois roues dentées successives, présentant un jeu entre les dents, ont des axes de rotation parallèles dont les deux entraxes forment un angle compris entre 10° et 180°, et du fait que l'axe de rotation de la roue médiane présente un jeu selon la bissectrice de l'angle.

Par "jeu entre les dents de deux roues", on entend le fait que la somme des diamètres des primitives des deux roues dentées est inférieure à l'entraxe établi par le positionnement des axes de rotation de chacune des roues dentées.

Selon un mode de réalisation préféré, le jeu entre les dents et le jeu de l'axe de rotation de la roue médiane sont compris entre 1/4 et 2/3 de la hauteur de dent.

Alors, lorsque le clapet tenu par l'arbre de la dernière roue, et tiré par les moyens de rappel, arrive en position détendue en butée contre l'embouchure du conduit où il s'immobilise, l'inertie des roues amont aux trois roues parallèles provoque une rotation supplémentaire entraînant l'axe de rotation de la roue médiane vers l'intérieur de l'angle jusqu'à annulation de tout jeu entre ces trois roues. Le clapet étant tenu par des engrenages sans jeu se retrouve bloqué.

A l'inverse, une rotation volontaire des roues amont, entraînées par la première roue animée par un moteur ou une manivelle, provoque d'abord un déplacement de l'axe de rotation de la roue médiane vers l'extérieur de l'angle, puis une rotation facilitée de la suite de l'engrenage par libération du jeu lors du réarmement de la dernière roue. En alternative, l'axe de la roue médiane peut d'abord être déplacé manuellement vers l'extérieur avant de réenclencher l'entraînement de la première roue.

Selon un premier mode de réalisation, l'une ou les deux extrémités de l'arbre solidaire de la roue médiane sont mobiles à l'intérieur de paliers oblongs fixes, ou à l'intérieur d'orifices oblongs de leur platine de support, orientés selon la bissectrice de l'angle formé par l'entraxe. En alternative, les paliers de l'une ou des deux extrémités de l'arbre solidaire de la roue médiane sont eux-mêmes mobiles dans leur platine selon la bissectrice de l'angle formé par l'entraxe.

En alternative, l'arbre solidaire de la roue médiane peut présenter un diamètre extérieur inférieur à celui interne du palier fixe circulaire dans lequel il tourne, ou inversement, le diamètre interne du moyeu de la roue médiane est plus large que celui externe de l'arbre fixe autour duquel il tourne.

Selon un mode de réalisation préféré, l'angle formé par les deux entraxes est compris entre 120° et 180°, gamme d'angles pour lesquels l'effet de genouillère est le plus important entre les trois roues.

De préférence, la troisième roue dentée est la dernière roue tournant sous l'effet d'un moyen élastique.

Si désiré, l'engrenage n'est composé que de roues dentées à axes parallèles disposés en quinconce, l'axe de rotation d'une roue sur deux présentant un jeu selon la bissectrice de l'angle formé par les entraxes avec ses deux roues adjacentes.

L'invention sera mieux comprise à l'étude de la description d'un mode de réalisation pris à titre nullement limitatif et illustré sur les figures annexées dans lesquelles :
- les figures la à 1f illustrent schématiquement les différentes phases de fonctionnement d'un engrenage à quatre roues selon un premier mode de réalisation de l'invention, et

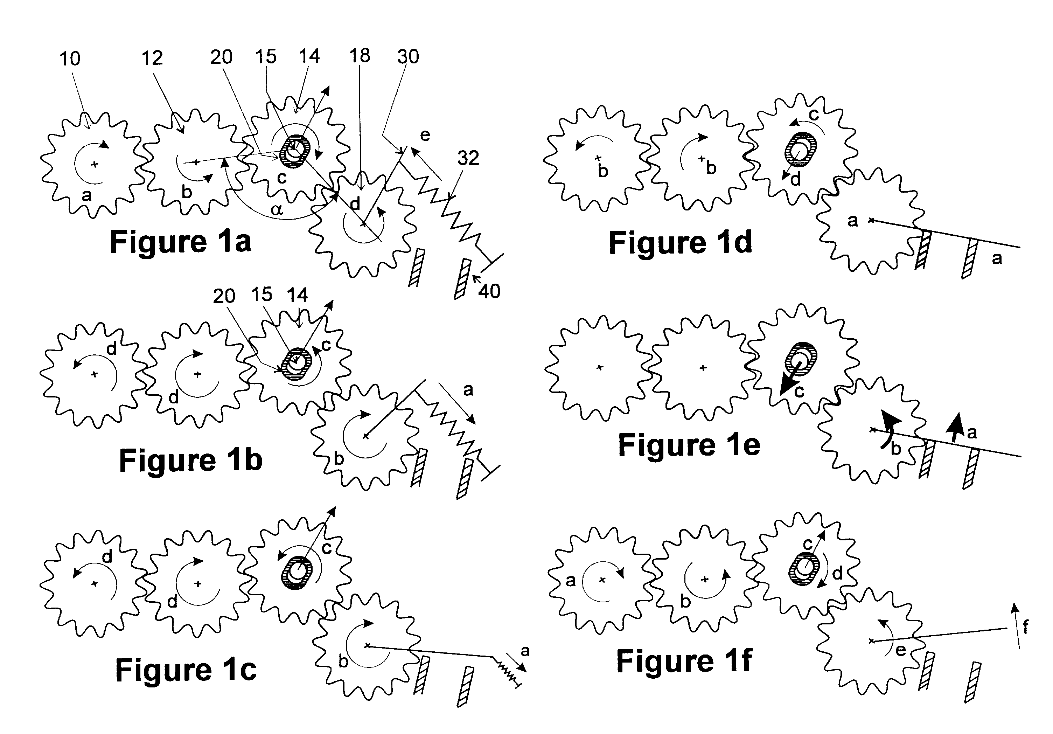

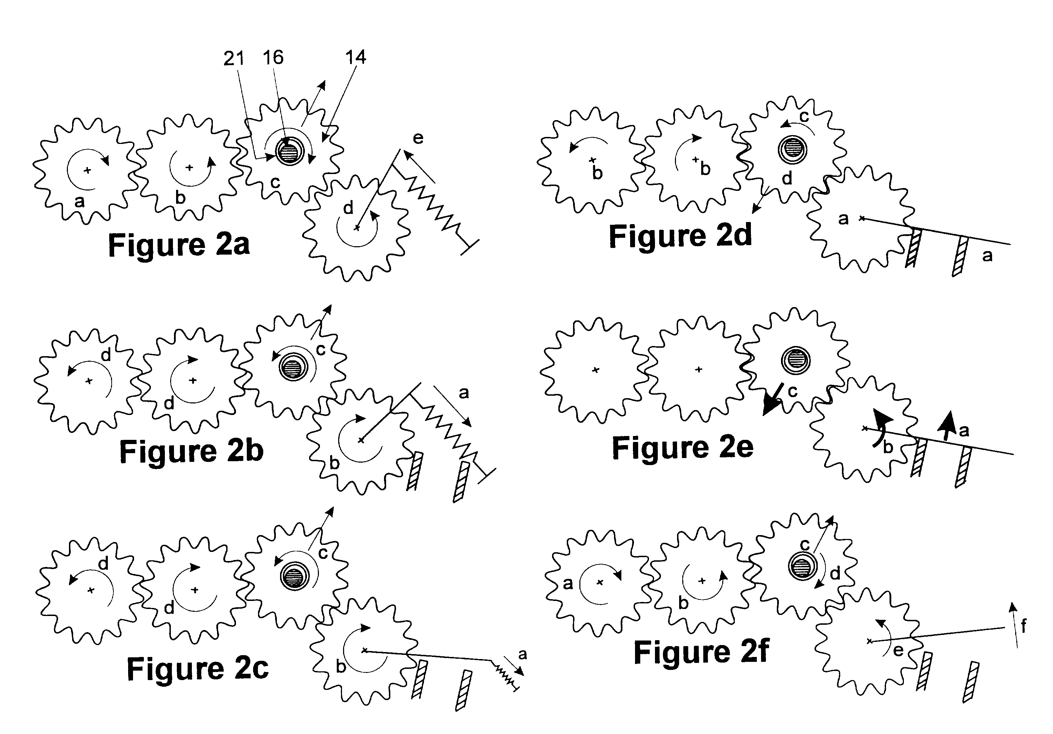

- les figures 2a à 2f sont des figures identiques aux figures 1 pour un second mode de réalisation de l'invention.

Sur la figure la est illustré un engrenage composé de quatre roues dentées successives 10, 12, 14 et 18 situées, dans cet exemple, sensiblement dans un même plan avec leurs axes de rotation parallèles. L'axe de la première roue dentée 10 est relié à un organe d'entraînement en rotation tel qu'un moteur électrique ou une manivelle. Sur l'arbre de la dernière roue dentée 18 est fixé une porte ou un clapet 30 sollicité en position de fermeture d'un conduit 40 par un ressort 32.

Comme dans la majorité des engrenages, on prévoit un léger jeu entre chacune des roues, c'est-à-dire que la somme de chacun des diamètres des primitives des deux roues adjacentes n'est pas égale mais légèrement inférieure à l'entraxe. Ceci évite que la tête des dents de l'une des roues ne vienne se coincer au fond des creux des dents de l'autre roue en induisant des pertes de transmission mécanique par coincement inutile. Dans l'exemple illustré, le jeu est de l'ordre du tiers de la hauteur des dents.

Plus particulièrement, selon l'invention, les trois dernières roues 12, 14 et 18 sont agencées de telle sorte que leurs deux entraxes forment un anglea de l'ordre de 130°. De plus, la roue 14 est flottante selon la bissectrice de l'anglea, c'est-à-dire que son axe 15 est mobile en translation à l'intérieur d'un palier fixe oblong 20. En l'occurrence, le jeu de l'axe 15 à l'intérieur du palier 20 est un peu plus grand que le jeu entre les dents.

L'engrenage 10, 12, 14 et 18 contrôlant la position de la porte 30 décrit précédemment fonctionne de la manière suivante.

La figure 1a illustre la phase de réarmement en position d'ouverture de la porte 30 au moyen du moteur ou de la manivelle agissant sur la première roue dentée 10. Plus précisément, le moteur entraîne la roue 10 dans le sens des aiguilles d'une montre (a), donc la roue intermédiaire 12 dans le sens inverse (b), donc la roue flottante 14 dans le même sens (c), et finalement, la roue de porte 18 dans le sens inverse (d), ce qui tire la porte 30 hors de l'embouchure du conduit 40 à l'encontre du ressort 32 qui s'allonge (e). Lorsque cette porte 30 parvient en une position dite armée, elle est retenue par un crochet ou une ventouse électromagnétique non illustrée. Si désiré, le moteur ou la manivelle est alors déconnecté de la première roue motrice 10.

Pendant cette phase, on comprend aisément que, la roue de porte 18 présentant une résistance à la rotation due à l'effet du ressort 32, l'action d'entraînement de la roue intermédiaire 12 sur la roue flottante 14 fait que son axe 15 est poussé et maintenu en position haute à l'intérieur de son palier oblong 20. Le jeu entre les dents minimisant les pertes de transmission est alors assuré.

Sur les figures 1b et 1c est illustrée la phase de fermeture de l'embouchure du conduit 40 par la porte 30. Cette phase intervient soit volontairement lors d'un exercice de fiabilité, soit automatiquement lors d'une alerte au feu, une fois que le crochet ou la ventouse électromagnétique ait relâché la porte 30. Le ressort 32 tire alors selon un mouvement (a), la porte en rotation induisant ainsi une rotation (b) dans le sens inverse des aiguilles d'une montre de la roue 18, donc des rotations libres respectivement dans le sens inverse(c,d) des roues 14 et 10, et dans le même sens (d) pour la roue intermédiaire 12. Cette rotation libre (c,d) des roues 10, 12, 14 se poursuit voire s'accélère au fur et à mesure que la porte 30 se dirige en direction de l'embouchure du conduit 14. L'inertie des roues 10 et 12 fait que l'entraînement de la roue de porte 18 continue à maintenir l'axe 15 de la roue flottante 14 en position haute à l'intérieur du palier oblong 20.

Sur la figure 1d est illustrée la phase d'obturation du conduit 40 par la porte 30. La roue de porte 18 s'immobilise brutalement (a). Par contre, l'inertie des roues amont 10 et 12 fait que celles-ci continuent encore à tourner (b) entraînant une légère rotation (c) de la roue flottante 14, et surtout un déplacement (d) de son axe 15 en position basse à l'intérieur de son palier oblong 20. Comme on peut le constater, cette rotation amont, impliquant ce déplacement d'axe, s'effectue le temps nécessaire pour annuler le jeu entre les dents des roues 12, 14 et 18.

Si alors, comme illustré sur la figure 1e, une explosion se produit à l'intérieur du conduit 40 se traduisant en une poussée brutale intense (a) contre la porte 18, on constate la présence d'un couple de rotation important (b) dans la roue de porte 18. Toutefois, ce couple confirme la position de l'axe 15 de la roue flottante 14 dans son palier oblong 20, donc un coincement des dents alors engrenées sans jeu. La porte 30 ainsi bloquée peut résister à la force (a).

La figure 1f illustre comment, une fois l'incident passé, l'entraînement dans le sens des aiguilles d'une montre (a) de la première roue 10 par son moteur ou sa manivelle induisant une rotation en sens inverse (b) de la roue intermédiaire 12 provoque immédiatement une levée (c) de l'axe 15 à l'intérieur du palier oblong 20 de la roue flottante 14. En alternative, un opérateur peut intervenir directement sur cet axe 15 pour le remonter manuellement dans son palier.

Ce décalage facilite la transmission du couple de rotation (e) à la roue de porte 18 qui commence immédiatement à s'ouvrir (f). La phase de réarmement telle que décrite en référence à la figure la peut se poursuivre.

Les figures 2a à 2f illustrent schématiquement les mêmes phases de fonctionnement mais pour une roue 14 qui est flottante du fait que le diamètre inteme de son moyeu 21 est supérieur à l'arbre fixe 16 autour duquel il tourne.

L'invention n'est pas strictement limitée aux exemples décrits et illustrés précédemment, mais comprend de nombreuses modifications et améliorations dans le cadre des revendications. Par exemple, il n'est pas obligatoire que les roues soient toutes dans un même plan dès lors que l'une d'entre elles présente une hauteur suffisante, ou soit dédoublée le long d'un axe commun, pour transmettre le couple de rotation d'un plan à un autre. Il convient alors de considérer l'angle α tel que vu perpendiculairement du dessus quand bien même les roues sont éventuellement dans trois plans différents.

L'homme de l'art comprendra aisément que les forces de déplacement de l'axe 15 au sein de son palier oblong 20 sont sensiblement égales au double de l'interaction entre les dents lorsque l'angle α est plat ; et que cette force diminue au fur et à mesure que cet angle α se réduit, cette force étant, par exemple, égale à celle de l'interaction entre les dents que multiplie le coefficient 1,4 lorsque l'angle α est à 90°.

## Revendications

1. Train d'engrenages (10,12,14,18) transmettant un mouvement rotatif de l'arbre d'une première roue (10) à l'arbre d'une dernière roue (18) auquel est rattachée une pièce (30) qui tourne contre l'effet d'un moyen élastique de rappel (32), et qui est susceptible d'être accrochée dans une première position dite armée par des moyens de retenue, caractérisé en ce qu'au moins trois roues dentées successives (12,14,18) présentant un jeu entre les dents, ont des axes de rotation parallèles dont les deux entraxes forment un angle (α) compris entre 10 et 180°, et en ce que l'axe de rotation (15) de la roue médiane (14) présente un jeu selon la bissectrice de l'angle (α).

2. Train d'engrenages selon la revendication 1, caractérisé en ce que le jeu entre les dents et le jeu de l'axe (15) de rotation de la roue médiane (14) sont compris entre 1/4 et 2/3 de la hauteur des dents.

3. Engrenage selon la revendication 1 ou 2, caractérisé en ce que l'une ou les deux extrémités de l'arbre (15) de la roue médiane (14) sont mobiles à l'intérieur de paliers oblongs fixes (20), ou à l'intérieur d'orifices oblongs de leur platine de support, orientés selon la bissectrice de l'angle (α) formé par l'entraxe.

4. Engrenage selon la revendication 1 ou 2, caractérisé en ce que les paliers de l'une ou des deux extrémités de l'arbre (15) de la roue médiane (14) sont mobiles dans leur platine de support selon la bissectrice de l'angle (α) formé par l'entraxe.

5. Engrenage selon la revendication 1 ou 2, caractérisé en ce que l'arbre (15) de la roue médiane (14) présente un diamètre extérieur inférieur à celui interne du palier circulaire fixe dans lequel il tourne.

6. Engrenage selon la revendication 1 ou 2, caractérisé en ce que le diamètre interne du moyeu (21) de la roue médiane (14) est plus large que celui externe de l'arbre (16) fixe autour duquel il tourne.

7. Engrenage selon la revendication 1, caractérisé en ce que l'angle formé par les deux entraxes est compris entre 120 et 180°.

8. Engrenage selon la revendication 1, composé de roues dentées à axes parallèles, caractérisé en ce que ces axes sont disposés en quinconce, et en ce que l'axe de rotation d'une roue sur deux présente un jeu selon la bissectrice de l'angle formé par les entraxes avec ces deux roues adjacentes.
